# EUROPEAN PATENT APPLICATION

(11) **EP 4 047 708 A1**
(43) Date of publication of application: **24.08.2022**
(21) Application number: 20955063.1
(22) Date of filing: 24.12.2020
(51) Int. Cl.: H01M 10/0583

(54) **ELECTRODE ASSEMBLY, BATTERY CELL, BATTERY, AND ELECTRICAL APPARATUS**

(30) Priority: 22.09.2020 CN 202022087154 U
(71) Applicant: Contemporary Amperex Technology Co., Limited, Jiaocheng District Ningde Fujian 352100 (CN)
(72) Inventor: JIN, Haizu, Ningde, Fujian 352100 (CN); WANG, Xiaona, Ningde, Fujian 352100 (CN); LIU, Xiaomei, Ningde, Fujian 352100 (CN); LIU, Jiang, Ningde, Fujian 352100 (CN); CHEN, Wenwei, Ningde, Fujian 352100 (CN)
(74) Representative: Barker Brettell LLP
(86) International application number: PCT/CN2020/139149
(87) International publication number: WO 2022/062221

(57) **Abstract**

The present application discloses an electrode assembly, a battery cell, a battery and an electricity-consuming device. The embodiments of the present application discloses an electrode assembly including: a first electrode sheet including an insulating substrate, an electricity-conducting layer arranged on a surface of the insulating substrate, and an active material layer coating on a surface of the electricity-conducting layer, in which the first electrode sheet is bent to form a multi-layer structure and includes a plurality of bending segments and a plurality of first layer-stacking segments arranged to be stacked, each of the bending segments is configured to connect two adjacent first layer-stacking segments, and each of the bending segments includes a guiding portion for guiding the bending segment to be bent during production; a second electrode sheet, in which a polarity of the second electrode sheet is opposite to a polarity of the first electrode sheet, and the second electrode sheet includes a plurality of second layer-stacking segments, the plurality of second layer-stacking segments and the plurality of first layer-stacking segments are alternately arranged in a layer-stacking direction of the first layer-stacking segments.

## Description

### CROSS REFERENCE TO RELATED APPLICATION

This application claims priority to Chinese Patent Application No. 202022087154.2, titled "ELECTRODE ASSEMBLY, BATTERY CELL, BATTERY, AND ELECTRICITY-CONSUMING DEVICE" and filed on September 22, 2020, which is hereby incorporated by reference in its entirety.

### TECHNICAL FIELD

The present application relates to the technical field of batteries, and in particular, to an electrode assembly, a battery cell, a battery and an electricity-consuming device.

### BACKGROUND

With the development of society, science and technology, a battery is widely used to supply power to high-power devices, such as an electric vehicle. The battery achieves greater capacity or power by connecting a plurality of battery cells in series or in parallel.

The battery cell includes a positive electrode sheet and a negative electrode sheet, and the positive electrode sheet and the negative electrode sheet are stacked to form an electrode assembly. However, during a stacking process, the positive electrode sheet and the negative electrode sheet are easily deviated from predetermined positions, thereby affecting the electrochemical performance of the battery cells.

### SUMMARY

The present application provides an electrode assembly, a battery cell, a battery and an electricity-consuming device, which can reduce the dislocation of an electrode sheet and reduce the risk of the lithium deposition.

In a first aspect, an embodiment of the present application provides an electrode assembly for a battery, including: a first electrode sheet including an insulating substrate, an electricity-conducting layer arranged on a surface of the insulating substrate, and an active material layer coating on a surface of the electricity-conducting layer, in which the first electrode sheet is bent to form a multi-layer structure and includes a plurality of bending segments and a plurality of first layer-stacking segments arranged to be stacked, each of the bending segments is configured to connect two adjacent first layer-stacking segments, and each of the bending segments includes a guiding portion for guiding the bending segment to be bent during production; a second electrode sheet, in which a polarity of the second electrode sheet is opposite to a polarity of the first electrode sheet, and the second electrode sheet includes a plurality of second layer-stacking segments, the plurality of second layer-stacking segments and the plurality of first layer-stacking segments are alternately arranged in a layer-stacking direction of the first layer-stacking segments.

According to an aspect of the embodiments of the present application, the guiding portion is arranged in a first direction, and the first direction is perpendicular to a bending direction of the bending segments.

According to an aspect of the embodiments of the present application, each of the first layer-stacking segments includes two first outer edges opposite to each other; after the bending segments is guided to be bent during production, the first outer edges of the two adjacent first layer-stacking segments connected to the bending segments are consistent.

According to an aspect of the embodiments of the present application, the guiding portion includes at least one groove and/or at least one through hole.

According to an aspect of the embodiments of the present application, when the guiding portion includes only one groove, in a first direction perpendicular to a bending direction of the bending segment, the groove is arranged continuously and penetrates the bending segment.

According to an aspect of the embodiments of the present application, when the guiding portion includes a plurality of grooves and/or a plurality of through holes, the plurality of grooves and/or the plurality of through holes are arranged to be spaced from one another.

According to an aspect of the embodiments of the present application, the groove is arranged on a surface of the bending segment close to the second layer-stacking segments.

According to an aspect of the embodiments of the present application, the groove penetrates the electricity-conducting layer and exposes the insulating substrate.

According to an aspect of the embodiments of the present application, when the guiding portion includes the through hole, the through hole penetrates the bending segment.

According to an aspect of the embodiments of the present application, only the insulating substrate is arranged on each of the bending segments.

In a second aspect, an embodiment of the present application provides a battery cell including the electrode assembly as described in the first aspect.

In a third aspect, an embodiment of the present application provides a battery including the battery cell as described in the second aspect.

In a fourth aspect, an embodiment of the present application provides an electricity-consuming device including the battery as described in the third aspect, in which the battery is configured to provide electrical energy.

In the electrode assembly in the embodiment of the present application, since the guiding portion is arranged at bending segment in the first electrode sheet, during the production process of the electrode assembly, when the first electrode sheet is bent, the first electrode sheet is easier to be bent in a region of the guiding portion of the bending segment under a guiding action of the guiding portion. Therefore, the controllability and accuracy of a bending position of the bending segment can be improved by arranging the guiding portion, thereby improving the consistency of the first outer edges of the two adjacent first layer-stacking segments. The possibility can be reduced that one of the first layer-stacking segment and the second layer-stacking segment as the negative electrode cannot completely cover the other one as the positive electrode due to the randomness of the bending position when the first electrode has been bent, so that the possibility of lithium deposition in the fabricated electrode assembly can be reduced. In addition, the first electrode sheet takes a composite structure composed of an insulating substrate and a electricity-conducting layer to replace a traditional metal current collector, so that it can further reduce the difficulty of bending the first electrode sheet and improve the controllability and accuracy of the bending position of the bending segment, thereby improving the uniformity of the first outer edges of the two adjacent first layer-stacking segments.

### BRIEF DESCRIPTION OF THE DRAWINGS

Features, advantages, and technical effects of exemplary embodiments of the present application will be described below with reference to the drawings.
Fig 1 shows a schematic structural view of a vehicle according to an embodiment of the present application;
Fig. 2 shows a schematic view of an exploded structure of a battery according to an embodiment of the present application;
Fig. 3 shows a partial schematic structure view of a battery module according to an embodiment of the present application;
Fig. 4 shows an exploded structure schematic view of a battery cell according to an embodiment of the present application;
Fig. 5 shows a schematic cross-segmental view of an electrode assembly according to an embodiment of the present application;
Fig. 6 shows a partial structure schematic top view of a first electrode sheet that has not been bent in the embodiment shown in Fig. 5;
Fig. 7 shows a side view structure schematic view of the first electrode sheet in the embodiment shown in Fig. 6;
Fig. 8 shows a schematic structural view of the first electrode sheet in the embodiment shown in Fig. 6 in a bent state;
Fig. 9 shows a schematic view of a first electrode sheet, a second electrode sheet and an separator that have not been bent in the embodiment shown in Fig. 5;
Fig. 10 shows a schematic top view of a first structure of an electrode assembly in the embodiment shown in Fig. 5;
Fig. 11 shows a schematic top view of a second structure of an electrode assembly in the embodiment shown in Fig. 5;
Figs. 12 to 17 respectively show schematic cross-segmental views of electrode assemblies according to various embodiments of the present application;
Fig. 18 shows a schematic structural view of a first electrode sheet as shown in Fig. 17 in a bent state;
Fig. 19 shows a schematic cross-segmental view of an electrode assembly according to another embodiment of the present application;
Fig. 20 shows a schematic structural view of a first electrode as shown in Fig. 19 in a bent state;
Fig. 21 shows a schematic cross-segmental view of an electrode assembly according to another embodiment of the present application;
Fig. 22 shows a schematic structural view of a first electrode sheet as shown in Fig. 21 in a bent state.

In the drawings, the drawings are not drawn to actual scale.

Reference number:
10. electrode assembly; 20. housing; 30. top cover plate; 40. electrode terminal; 50. adapter sheet;
11. first electrode sheet; 11a, insulating substrate; 11b, electricity-conducting layer; 11c, active material layer; 111, bending segment; 112, first layer-stacking segment; 113, guiding portion; 113a, groove; 113b. through hole; 114, weak region; 115, connecting region; 116, first outer edge; 117, second outer edge; 118, first tab;
12. second electrode sheet; 12a. insulating substrate; 12b, electricity-conducting layer; 12c. active material layer; 121, second layer-stacking segment; 122; third outer edge; 123. second tab;
13. separator;
100, 200, 300, 400, 500, 600, 700, 800: electrode assembly;
1000. vehicle; 2000. battery; 2010. battery module; 2011. battery cell; 2012. confluence portion; 2020. box body; 2021. first part; 2022. second part; 3000, controller; 4000, motor;
W, extending direction; H, thickness direction; X, first direction; Y, second direction; Z, bending direction.

### DETAILED DESCRIPTION

The implementation of the present application will be described in further detail below in conjunction with the drawings and embodiments. The detailed description and drawings of the embodiments below are used to exemplarily illustrate the principle of the present application, but cannot be used to limit the scope of the present application, that is, the present application can be not limited to the described embodiments.

In the description of the present application, it should be noted that, unless otherwise specified, "plurality" means more than two; the terms "upper", "lower", "left", "right", "inner", "outer", etc. indicate the orientation or positional relationship only for the convenience of describing the present application and simplifying the description, rather than indicating or implying that the device or the element referred to must have a specific orientation, be configured and operated in a specific orientation, and therefore cannot be understood as a limitation of the present application. In addition, the terms "first", "second", "third", etc. are only used for descriptive purposes, and shall not be understood as indicating or implying relative importance. The term "perpendicular" does not mean strictly perpendicular, but allows for an error within the allowable range. The term "parallel" does not mean strictly parallel, but allows for an error within the allowable range.

The "embodiment" referred in the present application means that a particular feature, a structure, or a characteristic described in connection with the embodiment can be included in at least one embodiment of the present application. The appearances of the phrase in various positions in the specification are not necessarily all referring to the same embodiment, nor a separate or alternative embodiment that is mutually exclusive of other embodiments. It is explicitly and implicitly understood by those skilled in the art that the embodiments described in the present application may be combined with other embodiments.

In the description of the present application, it should also be noted that, unless otherwise clearly specified and limited, the terms "mount", "communicate" and "connect" should be understood in a broad sense, for example, it can be a fixed connection, a detachable connection, or an integral connection, it can be a direct connection, or it can be connected indirectly through an intermediary. For those of ordinary skill in the art, the specific meaning of the above-mentioned terms in the present application can be understood according to specific situations.

A battery cell and a battery described in the embodiments of the present application are adapted to various devices using the battery, such as a mobile phone, a portable device, a notebook computer, a storage-battery car, an electric vehicle, a ship, a spacecraft, an electric toy, an electric tool and the like; for example, the spacecraft includes an airplane, a rocket, a space shuttle and a spacecraft and the like, the electric toy includes a stationary or mobile electric toy, such as a game console, an electric car toy, an electric ship toy and an electric airplane toy and the like; and the power tool includes a metal cutting power tool, a grinding power tool, an assembly power tool and a railway power tool, such as a power drill, a power grinder, a power wrench, a power screwdriver, a hammer, an impact drill, a concrete vibrator and a power planer.

The battery cell and battery described in the embodiments of the present application are not only adapted to the above-described electrical device, but can also be applied to all devices using battery. However, for the sake of brevity, the following embodiments take an electric vehicle as an example to illustrate.

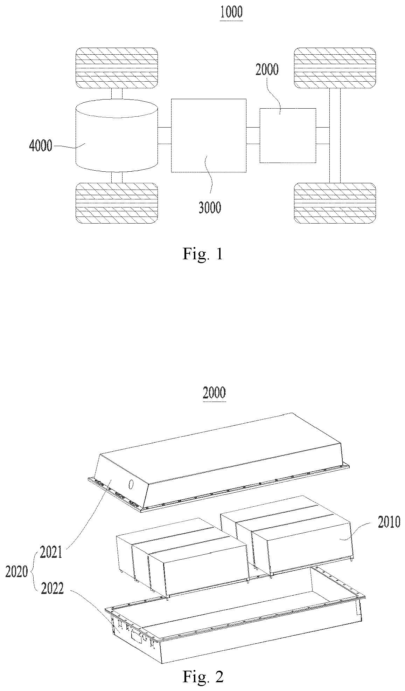

For example, as shown in Fig. 1 which is a schematic structural view of a vehicle 1000 according to an embodiment of the present application, the vehicle 1000 may be a fuel vehicle, a gas vehicle or a new energy vehicle that may be a pure electric vehicle, a hybrid vehicle or an extended-range vehicle. A battery 2000, a controller 3000 and a motor 4000 may be arranged inside the vehicle 1000, and the controller 3000 is used to control the battery 2000 to supply power to the motor 4000. For example, the battery 2000 may be arranged at the bottom or the front or rear of the vehicle 1000. The battery 2000 can be used for supplying power of the vehicle 1000, for example, the battery 2000 being used as an operating power source of the vehicle 1000, and for the circuit system of the vehicle 1000, for example, for starting, navigating and running of the vehicle 1000. In another embodiment of the present application, the battery 2000 can not only be used as the operating power source of the vehicle 1000, but also can be used as a driving power source of the automobile 4000 to provide driving power for the vehicle 1000 in place of or partially in place of fuel or natural gas.

In order to meet different usage power requirements, the battery may include a plurality of battery cells which may be connected in series or in parallel or in mixed connection that refers to the mixture of the series connection and the parallel connection. Optionally, the plurality of battery cells can be connected in series or in parallel or in mixed connection to form a battery module, and then a plurality of battery modules can be connected in series or in parallel or in mixed connection to form the battery. In other words, the plurality of battery cells can form the battery directly, or form the battery module first, and then the battery modules can form the battery.

In another embodiment of the present application, as shown in Fig. 2 which is an exploded structure schematic view of the battery 2000 according to an embodiment of the present application, the battery 2000 includes one or more battery modules 2010. For example, the battery 2000 includes the plurality of battery modules 2010, and the plurality of battery modules 2010 can be connected in series or in parallel or in mixed. The mixed connection refers to the mixture of the series connection and the parallel connection. The battery 2000 may further include a box body 2020 (or a cover body), the box body 2020 has a hollow structure inside, and the plurality of battery modules 2010 are accommodated in the box body 2020. As shown in Fig. 2, the box body 2020 includes two parts, which are referred to here as a first part 2021 and a second part 2022 respectively, and the first part 2021 and the second part 2022 are closed opposite to each other. The shapes of the first part 2021 and the second part 2022 may be determined according to the combined shape of the plurality of battery modules 2010, and each of the first part 2021 and the second part 2022 may have an opening. For example, each of the first part 2021 and the second part 2022 can be a rectangular parallelepiped with a hollow inside and only one of its surfaces open, and with the opening of the first part 2021 and the opening of the second part 2022 arranged opposite to each other, the first part 2021 and the second part 2022 are coupled with each other to form a box body 2020 with a closed cavity. After the plurality of battery modules 2010 are combined and connected in parallel or in series or in mixed connection, they are placed in a box body 2020 enclosed by the first part 2021 and the second part 2022 coupled with each other.

Optionally, the battery 2000 may also include other structures, which will not be repeated here. For example, the battery 2000 may further include a confluence portion, which is used to realize the electrical connection among the plurality of battery cells, such as connection in parallel or in series or mixed. Specifically, the confluence portion may realize electrical connection among the battery cells by connecting electrode terminals of the battery cells. Further, the confluence portion may be fixed to the electrode terminals of the battery cells by welding. The electrical energy of the plurality of battery cells can be further drawn out through the box body 2020 through an electricity-conducting mechanism. Optionally, the electricity-conducting mechanism may also belong to the bussing member.

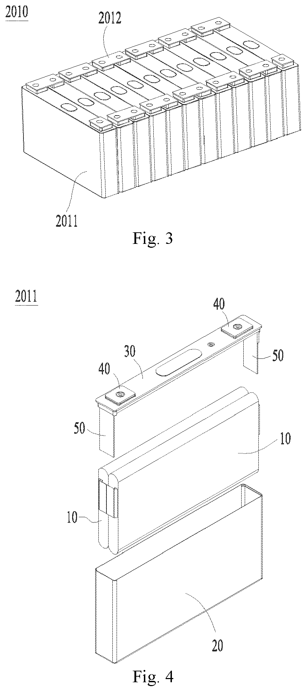

According to different power requirements, the battery module 2010 may include one or more battery cells. As shown in Fig. 3, the battery module 2010 includes a plurality of battery cells 2011 which can be connected in series, in parallel or in mixed connection to achieve the larger capacity or power. Optionally, the battery module 2010 further includes the confluence portion 2012, and the confluence portion 2012 is used to realize the electrical connection (for example, in parallel, in series, or in mixed connection) among the plurality of battery cells 2011. For example, the battery cell includes a lithium-ion secondary battery, a lithium-ion primary battery, a lithium-sulfur battery, a sodium-lithium-ion battery or a magnesium-ion battery, but is not limited thereto. The battery cell may be in the shape of cylinder, flat body, cuboid or other shapes. For example, as shown in Fig. 3, the battery cell is in the shape of a cuboid structure.

Fig. 4 is an exploded structure schematic view of a battery cell disclosed in an embodiment of the present application. Referring to Fig. 4, the battery cell 2011 of the embodiment in the present application includes a housing 20, an electrode assembly 10 arranged in the chousing 20, a cover plate 30 connected to the housing 20 and an electrode terminal 40 arranged at the cover plate 30 and electrically connected to the electrode assembly 10.

The housing 20 in the embodiment of the present application is in a shape of a cuboid structure or other shapes. The housing 20 has an inner space that accommodates the electrode assembly 10 and electrolyte, and an opening communicating with the inner space. The housing 20 may be made of the material such as the aluminum, the aluminum alloy, the plastic or the like.

The cover plate 30 in the embodiment of the present application has an outer surface and an inner surface opposite to each other and an electrode lead-out hole penetrating the outer surface and the inner surface. The cover plate 30 can cover an opening of the housing 20 and be connected with the housing 20 in a sealed manner. The inner surface of the cover plate 30 faces towards the electrode assembly 10. The electrode terminal 40 is arranged at the cover plate 30 and is arranged corresponding to the electrode lead-out hole. A part of the electrode terminal 40 is exposed on the outer surface of the cover plate 30 and is used for welding with the confluence portion. Optionally, the battery cell 2011 further includes an adapter sheet 50, and the adapter sheet 50 is used to connect the electrode assembly 10 and the electrode terminal 40.

After noticing the problem of the poor electrochemical performance of the battery cell in the related art, the applicant found that at least one of the positive electrode sheet and the negative electrode sheet in the formed electrode assembly deviates from a predetermined position, so that it can affect the electrochemical performance of the battery cell. The applicant further found that at least one of the positive electrode sheet and the negative electrode sheet in the formed electrode assembly deviates from the predetermined position, resulting in lithium deposition in the electrode assembly, thereby affecting the electrochemical performance of the battery cell. It can be speculated that the reason may be that a size of a portion of the negative electrode sheet extending out of the outer edge of the positive electrode sheet is too small or the negative electrode sheet does not extend out of the outer edge of the positive electrode sheet.

By analyzing the assembly process of the electrode assembly, the applicant further studied the lithium deposition phenomenon and found that, taking the negative electrode sheet arranged continuously and the positive electrode sheet arranged to be spaced from one another as an example, it is difficult for the negative electrode sheet to be bent along the predetermined region during the bending process. As a result, after the positive electrode sheet and the negative electrode sheet are stacked to form the electrode assembly, the size of the portion of the negative electrode sheet extending out of the outer edge of the positive electrode sheet is too small, which is likely to cause the lithium deposition in the electrode assembly, thereby affecting the electrochemical performance and safety performance of the battery cell.

Based on the above problems discovered by the applicant, the applicant improves the structure of the electrode assembly, and the embodiments of the present application are further described below.

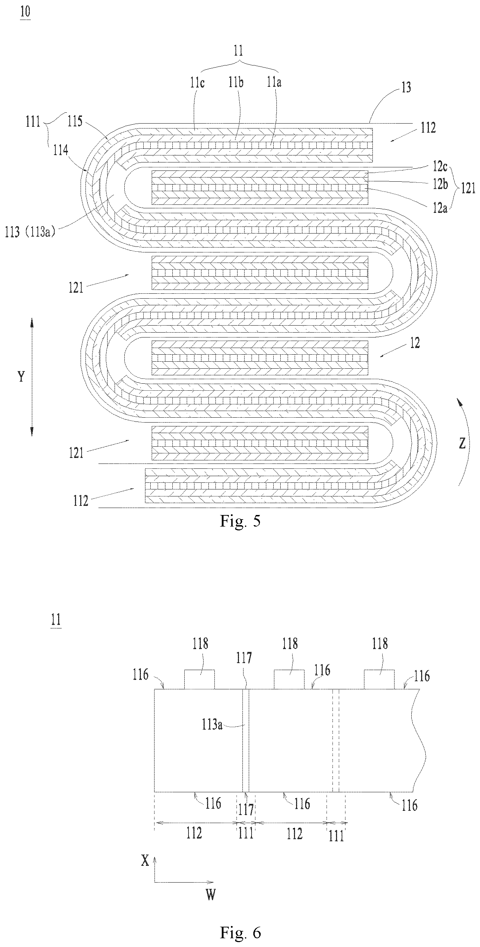

In some optional embodiments, Fig. 5 schematically discloses a schematic crosssectional view of an electrode assembly. Referring to Fig. 5, the electrode assembly 10 includes a first electrode sheet 11 and a second electrode sheet 12, and a polarity of the second electrode sheet 12 is opposite to a polarity of the first electrode sheet 11. The electrode assembly 10 further includes two separators 13, and the first electrode sheet 11 is arranged between the two separators 13. The separators 13 can separate the first electrode sheet 11 from the second electrode sheet 12 to avoid the short circuit caused by the direct conduction between the first electrode sheet and the second electrode sheet. Optionally, the first electrode sheet 11 is the negative electrode sheet, and the second electrode sheet 12 is the positive electrode sheet; alternatively, the first electrode sheet 11 can also be the positive electrode sheet, and the second electrode sheet 12 can be the negative electrode sheet.

The first electrode sheet 11 includes an insulating substrate 11a, an electricity-conducting layer 11b arranged on a surface of the insulating substrate 11a and an active material layer 11c coating on a surface of the electricity-conducting layer 11b. The insulating substrate 11a can be made of the high molecular polymer material such as PP, PE, PET, or PI, which are resistant to corrosion by the electrolyte. The electricity-conducting layer 11b can be the metal base material; the active material layer 11c includes the active material. Optionally, the first electrode sheet 11 is the negative electrode sheet, the electricity-conducting layer 11b of the negative electrode sheet is made of the copper base material, and the active material layer 11c of the negative electrode sheet includes the graphite or silicon. In some embodiments, each of two surfaces of the insulating substrate 11a is provided with the electricity-conducting layer 11b.

Optionally, the second electrode sheet 12 includes an insulating substrate 12a, an electricity-conducting layer 12b arranged at the surface of the insulating substrate 12a and an active material layer 12c coating on a surface of the electricity-conducting layer 12b. The insulating substrate 12a can be made of the high molecular polymer material such as PP, PE, PET, or PI, which are resistant to corrosion by the electrolyte. The electricity-conducting layer 12b can be the metal base material; the active material layer 12c includes the active material. Optionally, the second electrode sheet 12 is the positive electrode sheet, the electricity-conducting layer 12b of the positive electrode sheet is made of the aluminum base material, and the active material layer 12c of the positive electrode sheet includes the lithium manganate, the lithium iron phosphate or the ternary material. In some embodiments, each of two surfaces of the insulating substrate 12a is provided with the electricity-conducting layer 12b.

In some embodiments, the second electrode sheet 12 includes a metal current collector and an active material layer coating on the surface of the metal current collector, and the metal current collector is used to replace the insulating substrate 12a and the electricity-conducting layer 12b.

The first electrode sheet 11 is bent to form a multi-layer structure and includes a plurality of bending segments 111 and a plurality of first layer-stacking segments 112 arranged to be stacked. Each of the bending segments 111 is used to connect two adjacent first layer-stacking segments 112. The first electrode sheet 11 is a continuous extending structure as a whole, and is cyclically bent in a "Z" shape. After the first electrode sheet 11 is bent into the multi-layer structure, the bending segments 111 are at least partially in a bent state. Each of the bending segments 111 has a guiding portion 113 for guiding the bending segment 111 to be bent during production. The guiding portion 113 can at least reduce the stiffness of a partial region of the bending segment 111 to guide the bending segment 111 to be bent during production.

Optionally, each of the bending segments 111 includes a weak region 114 and a connecting region 115. The weak region 114 is formed by arranging the guiding portion 113 on the bending segment 111. Compared with the connecting region 115, the weak region 114 is easier to be bent. For example, the guiding portion 113 includes a groove 113a, and the groove 113a can reduce a thickness of the weak region 114, thereby making the weak region 114 easier to be bent.

In some embodiments, there are two connecting regions 115, the weak region 114 is connected between the two connecting regions 115, and each of the connecting regions 115 is connected to a corresponding one of the first layer-stacking segments 112; in an alternative embodiment, there are two weak regions 114, the connecting region 115 is connected between the two weak regions 114 , and each of weak regions 114 is connected to a corresponding one of the first layer-stacking segments 112.

The second electrode sheet 12 includes a plurality of second layer-stacking segments 121, and the plurality of second layer-stacking segments 121 and the plurality of first layer-stacking segments 112 are arranged alternately in a stacking direction of the first layer-stacking segments 112. In the stacking direction of the first layer-stacking segments 112, the bending segments 111 and the second layer-stacking segments 121 do not have an overlapping region with each other. In the embodiment, the bending segments 111 are completely in the bent state, and starting lines of the bending segments 111 are the regions where the bending segments start bending relative to the first layer-stacking segments 112. In a direction parallel to the second layer-stacking segments 121, the edges of the first layer-stacking segments 112 extend out of the edges of the second layer-stacking segments 121. There are gaps between the bending segments 111 and the second layer-stacking segments 121, and ends of the second layer-stacking segments 121 do not contact with the bending segments 111, so as to reduce the possibility that the active material falls off or drops powder from the ends of the second layer-stacking segments 121 due to conflict between the ends and the bending segments.

Optionally, after the first electrode sheet 11 has been bent, the groove 113a on each of bending segments 111 is arranged at an inner surface of the bending segment 111, in other words, the groove 113a is recessed with respect to the inner side surface of the bending segment 111. Here, the inner side surface refers to a surface of the bending segment 111 close to the second layer-stacking segment 121. Correspondingly, an outer surface of the bending segment 111 refers to a surface of the bending segment 111 away from the second layer-stacking segment 121. Further optionally, the groove 113a on each of the bending segments 111 is located at the side of the insulating substrate 11a close to the second layer-stacking segment 121. In this embodiment, the groove 113a is formed in a middle region of the bending segment 111.

Fig. 6 schematically shows a partial structure of the first electrode sheet 11 in an unfolded state. Referring to Fig. 6, the first electrode sheet 11 includes the plurality of bending segments 111 which are at least partially in the bent state after being bent and the plurality of first layer-stacking segments 112. The first electrode sheet 11 is a continuous extension structure as a whole. In an extending direction W of the first electrode sheet 11 itself, the bending segments 111 and the first layer-stacking segments 112 are arranged alternately. Each of the bending segments 111 is connected to two adjacent first layer-stacking segments 112. In a first direction X, each of the first layer-stacking segments 112 has two first outer edges 116 opposite to each other, and each of the bending segments 111 has two second outer edges 117 opposite to each other. The first direction X is the same as the width direction of the first electrode sheet 11. The first direction X is perpendicular to the extending direction W. In the embodiment, in the first direction X, the first outer edge 116 and the second outer edge 117 at the same side are flush with each other. The first electrode sheet 11 also has a first tab 118 extending out of the first outer edge 116 of the first layer-stacking segment 112 in the first direction X; the first tab 118 includes the insulating substrate 11a and the electricity-conducting layer 11b arranged on the surface of the insulating substrate 11a, and the electricity-conducting layer 11b is at least partially uncoated with the active material layer 11c. Optionally, the number and positions of the first tabs 118 are arranged in a one-to-one correspondence with the number and positions of the first layer-stacking segments 112. In the embodiment, the number of the guiding portions 113 may be the same as the number of the bending segments 111. Of course, it can be understood that some of the bending segments 111 of all the bending segments 111 are provided with the guiding portions 113, while other bending segments 111 may not be provided with the guiding portions 113. The guiding portions 113 are used to guide the bending segments 111 to be bent during production. During the production process, when an external force is applied to the first electrode sheet 11 to perform the bending operation, since the guiding portions 113 are arranged on the bending segments 111, the bending segments 111 can be more easily bent in the region where the guiding portions 113 are located. Therefore, it is beneficial to improving the controllability and accuracy of the bending positions, thereby ensuring that the first electrode sheet 11 and the second electrode sheet 12 are respectively at predetermined positions, and ensuring that the battery cell has good electrochemical performance. The guiding portions 113 are arranged in the first direction X. Optionally, each of the guiding portions 113 includes the groove 113a extending in the first direction X.

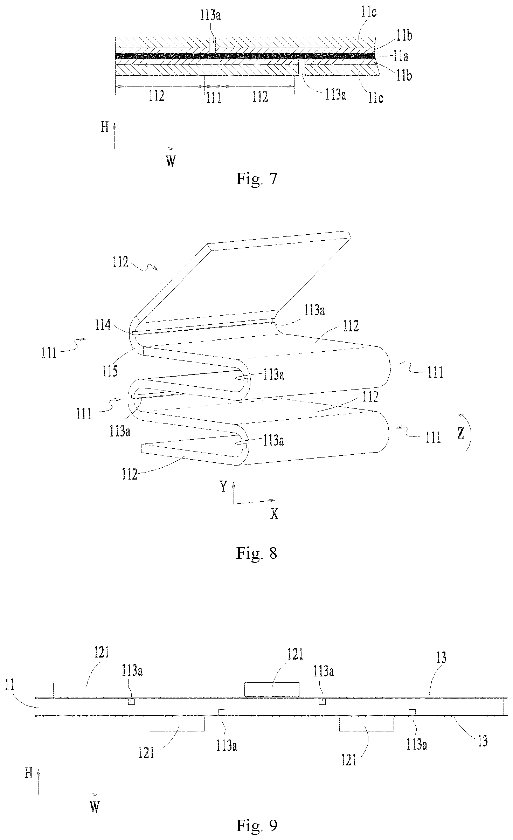

Fig. 7 schematically shows a cross-segmental structure of the first electrode sheet 11 of the embodiment shown in Fig. 6. The first electrode sheet 11 includes the insulating substrate 11a, an electricity-conducting layer 11b arranged on the surface of the insulating substrate 11a, and the active material layer 11c coating on the surface of the electricity-conducting layer 11b. The insulating substrate 11a has two surfaces opposite to each other in a thickness direction H of the first electrode sheet 11. The two electricity-conducting layers 11b are respectively arranged on the two surfaces, and each of the electricity-conducting layers 11b is coated with an active material layer 11c. The insulating substrate 11a can be made of the high molecular polymer material such as PP, PE, PET or PI, which is resistant to corrosion by the electrolyte. In an example, when the first electrode sheet 11 is the positive electrode sheet, the electricity-conducting layer 12b is made of the aluminum base material, and the active material layer 12c includes lithium manganate, lithium iron phosphate or a ternary material. When the first electrode sheet 11 is the negative electrode sheet, the electricity-conducting layer 11b adopts the copper base material, and the active material layer 11c includes graphite or silicon. The guiding portion 113 may be a trace left by things. Alternatively, it may refer to a structure formed after removing a part of the active material layer 11c on the first electrode sheet 11 by a material removing member, or a structure formed by removing a part of the active material layer 11c and a part of the electricity-conducting layer 11b on the first electrode sheet 11, or a structure formed by removing a part of the active material layer 11c, a part of the electricity-conducting layer 11b and a part of the insulating substrate 11a on the first electrode sheet 11.

In this embodiment, each of the bending segments 111 is provided with the guiding portion 113. In this embodiment, the guiding portion 113 includes a groove 113a. The grooves 113a are recessed and extended in a direction from the surface of the first electrode sheet 11 towards the insulating substrate 11a in the thickness direction H of the first electrode sheet 11. In the two adjacent bending segments 111, the groove 113a arranged in one bending segment 111 is located at one side of the insulating substrate 11a, and the groove 113a arranged in the other bending segment 111 is located at the other side of the insulating substrate 11a. The grooves 113a may be formed by removing a part of the active material layer 11c and a part of the electricity-conducting layer 11b on the first electrode sheet 11. Alternatively, when the electricity-conducting layer 11b is formed on the insulating substrate 11a, the electricity-conducting layer 11b can be omitted at a corresponding position. In this embodiment, the groove 113a penetrates the electricity-conducting layer 11b and exposes the insulating substrate 11a; alternatively, in the thickness direction H, the depth of the groove 113a may be equal to the sum of the thicknesses of the active material layer 11c and the thicknesses of the electricity-conducting layer 11b. The groove 113a extends to the surface of the insulating substrate 11a, but does not extend into the insulating substrate 11a. However, it can be understood that the depth of the groove 113a can also be less than or equal to the thickness of the active material layer 11c, so that the groove 113a does not penetrate the electricity-conducting layer 11b in the thickness direction H, at this time, an electricity-conducting layer 11b is further arranged between the groove 113a and the insulating substrate 11a. When the depth of the grooves 113a is less than or equal to the thickness of the active material layer 11c, the grooves 113a will not damage the electricity-conducting layer 11b, and the adjacent first layer-stacking segments 112 can be electrically connected through the electricity-conducting layers 11b of the bending segments 111.

In an example, an orthographic projection of the groove 113a on a plane perpendicular to the first direction X may be a rectangle. However, the orthographic projection of the groove 113a may be not limited to a rectangle, or may be a U-shape or a V-shape. Optionally, a mouth portion of the groove 113a is greater than or equal to a bottom of the groove 113a, which, on the one hand, is beneficial to ensuring the proper bending positions of the bending segments 111 and also the ease of forming the groove 113a, and which, on the other hand, allows the electrode active material near the mouth portion of the groove 113a to be subjected to a less or no extrusion stress during the bending process, so that the bending resistance of the first layer-stacking segments 112 can be reduced, making bending easier and more accurate to a predetermined position.

Referring to Fig. 5 to Fig. 7, in the first direction X, the grooves 113a are continuously arranged and extend to the two second outer edges 117 of the bending segment 111 opposite to each other so as to penetrate the entire bending segment 111. Compared with the case where the groove 113a does not penetrate the entire bending segment 111, during the bending process, the electrode active material near the groove 113a can be subjected to the less or no squeezing stress, so that the bending resistance of the first layer-stacking segment 112 can be reduced, and therefore, the accuracy of the bending position of the bending segment 111 can be better ensured, which further ensures that the first layer-stacking segment 112 can be more easily and more accurately bent to a predetermined position. In this embodiment, the bending segment 111 has a part of the active material layer 11c. One of the two active material layers 11c is not completely removed, and the other layer may or may not be completely removed. In this embodiment, in the extending direction W of the first electrode sheet 11, the opening size of the groove 113a is smaller than the size of the bending segment 111, as a result of which, the other regions on the bending segment 111 than the guiding portion 113 can be covered by the active material layer 11c. In an example, in the weak region 114, both two active material layers 11c are completely removed.

The size of the guiding portion 113 in the first direction X can be set according to the size of the bending segment 111 in the first direction X. The size of the guiding portion 113 in the first direction X is the length of the guide portion 113. The size of the bending segment 111 in the first direction X is also the length of the bending segment 111. Therefore, in some other embodiments, the groove 113a does not penetrate through the bending segment 111 in the first direction X. The ratio of the size of the groove 113a in the first direction X to the size of the bending segment 111 in the first direction X may be 0.4 to 0.8, preferably 0.4, 0.5, 0.6, 0.7 or 0.8.

Fig. 8 schematically shows the structure of the first electrode sheet 11 of the embodiment shown in Fig. 6 that is in a state of multiple reciprocating fold. During the manufacturing process of the electrode assembly 10, the first electrode sheet 11 needs to be bent. During production, the guiding portion 113 can guide the bending segment 111 to be bent; in other words, the bending segment 111 can be bent along the guiding portion 113, so that the bending position can be located at a predetermined position, and it is beneficial to ensure that the first outer edges 116 of the two adjacent first layer-stacking segments 112 can be consistent. The bending segment 111 of the first electrode sheet 11 can be bent in the bending direction Z as shown in Fig. 8. The bending direction Z and the first direction X are perpendicular to each other, that is, the plane where the bending direction Z is located and the first direction X are perpendicular to each other. In this embodiment, the first electrode sheet 11 may be reciprocatingly bent substantially in a zigzag. The dashed line shown in Fig. 8 does not represent a physical structure, but schematically shows a dividing line between the bending segment 111 and the first layer-stacking segment 112. Since the two adjacent grooves 113a are located on two surfaces of the first electrode sheet 11 opposite to each other, and the grooves 113a are located at the side of the bending segment 111 that is subjected to the extrusion stress when the bending segment 111 is bent, after the first electrode sheet 11 is bent, the opening of the groove 113 a on the bending segment 111 faces to a space formed between two adjacent first layer-stacking segments 112; that is, the groove 113a is located on the inner surface of the bending segment 111, so that a side of the weak region 114 close to the groove 113a does not bear a tensile stress, thereby reducing the possibility of breaking under the action of the tensile stress in the weak region 114. After the first electrode sheet 11 is folded, two adjacent first layer-stacking segments 112 can be stacked and arranged spaced from one another in a second direction Y, and the space formed between the two adjacent first layer-stacking segments 112 can be used to accommodate the second layer-stacking segments 121 of the second electrode sheet 12. The second direction Y is the same as a stacking direction of the first layer-stacking segment 112 and is perpendicular to the first direction X. In this embodiment, the bending segment 111 may be in a shape of an arc, such as a circular arc.

In the embodiment as shown in Fig. 9, based on the first electrode sheet 11, in the thickness direction H of the first electrode sheet 11, the separators 13 are respectively arranged at two sides of the first electrode sheet 11 opposite to each other. The two separators 13 are arranged in pairs, and the first electrode sheet 11 is arranged between the two separators 13. The separators 13 cover the first layer-stacking segment 112 and the bending segment 111. During the production process, the two separators 13 each are attached to the first electrode sheet 11 by a corresponding feeding equipment. The second electrode sheet 12 is arranged at the side of the separator 13 away from the first electrode sheet 11. The polarity of the first electrode sheet 11 and the polarity of the second electrode sheet 12 are opposite, and when one of the electrode sheets is the positive electrode sheet, the other one is the negative electrode sheet. The second electrode sheet 12 includes the plurality of second layer-stacking segments 121. In this embodiment, two adjacent second layer-stacking segments 121 are respectively arranged at two sides of the first electrode sheet 11 opposite to each other. In the thickness direction H, the first layer-stacking segment 112 and the second layer-stacking segment 121 are positioned corresponding to each other. In this embodiment, a second layer-stacking segment 121 is arranged between the two adj acent bending segments 111. However, the present application does not limit the second layer-stacking segment 121 arranged between two adjacent bending segments 111, and the suitable number of the second layer-stacking segments 121 may also be provided according to the product requirements. In an example, after the separators 13 are arranged on the first electrode sheet 11, the second layer-stacking segment 121 is attached to the separator 13. For example, the second layer-stacking segment 121 and the separator 13 may be connected by thermal compression, electrophoresis or adhesive. The separator 13 is an insulator arranged between the first electrode sheet 11 and the second electrode sheet 12. The material of the separator 13 may be an insulating material such as the plastic or the like, so as to insulate and isolate the first electrode sheet 11 and the second electrode sheet 12.

After first electrode sheet 11, the separators 13 and the second electrode sheet 12 are combined according to the mode as shown in Fig. 9, the bending segment 111 can be bent under the guidance by the guiding portion 113, and finally the bent state as shown in Fig. 5 can be formed.

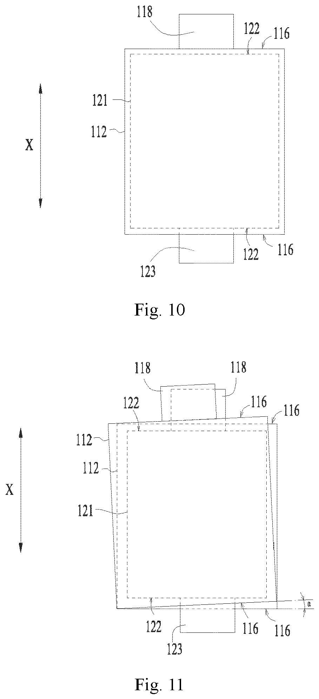

Fig. 10 schematically shows a top-view structure after the first layer-stacking segment 112 and the second layer-stacking segment 121 are stacked. In this embodiment, the first electrode sheet 11 is the negative electrode sheet, and the second electrode sheet 12 is the positive electrode sheet. Under the guiding action of the guiding portion 113 on the bending segment 111, after the first electrode sheet 11 has been bent reciprocatingly, all of circumferential edges of the first layer-stacking segment 112 extend out of the second layer-stacking segment 121, thereby ensuring that the second stacking segment 121 is entirely covered by the first layer-stacking segment 112, and effectively reducing the possibility of lithium deposition caused by the second layer-stacking segment 121 extending out of the first layer-stacking segment 112. Herein, the expression that the second layer-stacking segment 121 is entirely covered by the first layer-stacking segment 112 means that an orthographic projection of the second layer-stacking segment 121 in the second direction Y is completely within an orthographic projection of the first layer-stacking segment 112 in the second direction Y, and then the projected area of the second layer-stacking segment 121 is smaller than the projected area of the first layer-stacking segment 112. In an example, the distance between the first outer edge 116 of the first layer-stacking segment 112 and a third outer edge 122 of the corresponding second layer-stacking segment 121 is greater than or equal to 0.2 mm and less than or equal to 5 mm, preferably 0.5 mm, 1mm, 1.5mm, 2mm, 2.5mm, 3mm, 3.5mm, 4mm or 4.5mm. Since the bending segment 111 is provided with the guiding portion 113, the first electrode sheet 11 is bent under the guiding action of the guiding portion 113, so that the respective first outer edges 116 of the two adjacent first layer-stacking segments 112 connected with the bending segment 111 are consistent. In other words, there is an angle α between the two first outer edges 116 of the two adjacent first layer-stacking segments 112 at the same side. Herein, the expression that the respective first outer edges 116 of the two adjacent first layer-stacking segments 112 are consistent includes the state shown in Fig. 10, that is, in the second direction Y, the orthographic projections of the two adjacent first layer-stacking segments 112 coincide with each other. The angle α between the two first outer edges 116 of the two adjacent first layer-stacking segments 112 at the same side is 0°, therefore, in the top-view state, the respective first outer edges 116 of the two adjacent first layer-stacking segments 112 are aligned with each other and kept consistent. The consistency of the respective first outer edges 116 of the two adjacent first layer-stacking segments 112 also includes the state shown in Fig. 11. Fig. 11 schematically shows another top-view structure after the first layer-stacking segment 112 and the second layer-stacking segment 121 are stacked. The two first outer edges 116 of the two adjacent first layer-stacking segments 112 at the same side in the top-view state are not completely aligned with each other. There is an angle α between the two first outer edges 116 of the two adjacent first layer-stacking segments 112 at the same side. The angle α is greater than 0° and less than or equal to 30° to ensure that the first layer-stacking segment 112 covers the second layer-stacking segment 121. Preferably, the value of the angle α is 5°, 10°, 15°, 20° or 25°. Herein, the angle α is an allowable error angle. The first outer edge 116 of the first layer-stacking segment 112 which has been bent is offset so as to fail to coincide with the first outer edge 116 of another first layer-stacking segment 112; however, it can still be ensured that when the first layer-stacking segment 112 covers the second layer-stacking segment 121, the angle α between the two first outer edges 116 of two adjacent first layer-stacking segments 112 at the same side can refer to the allowable error angle.

In the first electrode sheet 11 of the embodiment of the application, due to arranging the guiding portion 113 in the bending segment 111, in the production process of the electrode assembly 10, when the first electrode sheet 11 is subjected to a bending operation, under the guiding action of the guiding portion 113 , the first electrode sheet 11 is more easily bent in the region of the guiding portion 113 of the bending segment 111, so that the controllability and accuracy of the bending position of the bending segment 111 can be improved by arranging the guiding portion 113, thereby improving the consistency of the first outer edges 116 of the two adjacent first layer-stacking segments 112. Therefore, the possibility can be reduced that one of the first layer-stacking segment 112 and the second layer-stacking segment 121 as the negative electrode may not completely cover the other one as the positive electrode due to the randomness of the bending position after the first electrode sheet 11 is bent, so as to reduce the possibility of lithium deposition in the fabricated electrode assembly 10. In addition, the active material layer 11c itself has a certain brittleness. During the bending process of the bending segment 111, the active material layer 11c will be subjected to an external force, so that the active material layer 11c may fall off or drop the powder from the electricity-conducting layer 11b, which can affect the electrochemical performance and safety performance of the electrode assembly 10. In the present application, the grooves 113a are formed by reducing the corresponding active material layers 11c, so that during the bending process of the bending segment 111, the provided grooves 113a are beneficial to reducing the internal stress borne by the corresponding active material layer 11c, thereby reducing the possibility that the active material layer 11c falls off or drops powder.

In addition, the first electrode sheet 11 in the embodiment of the present application utilizes the composite structure of the insulating substrate 11a and the electricity-electricity-conducting layer 11b to replace the traditional metal current collector, which can further reduce the bending difficulty of the first electrode sheet 11, thereby improving the controllability and the accuracy of the bending position of the bending segment 111, and improving the consistency of the first outer edges 116 of the two adjacent first layer-stacking segments 112.

A thickness of the insulating substrate 11a may be 1 µm-20 µm, and a thickness of the electricity-electricity-conducting layer 11b may be 0.1 µm-10 µm. During the use of the battery cell, in the case that a foreign object pierces the first electrode sheet 11, since the thickness of the electricity-electricity-conducting layer 11b is small, the burr generated by the electricity-electricity-conducting layer 11b at a pierced position is also small, and it is difficult for the burr to pierce the separator 13, which can reduce the risk of short circuit and improve safety performance.

In some other embodiments, the same structure as the embodiment shown in Fig. 5 is not repeated here, and the difference from the embodiment shown in Fig. 5 will be mainly described here.

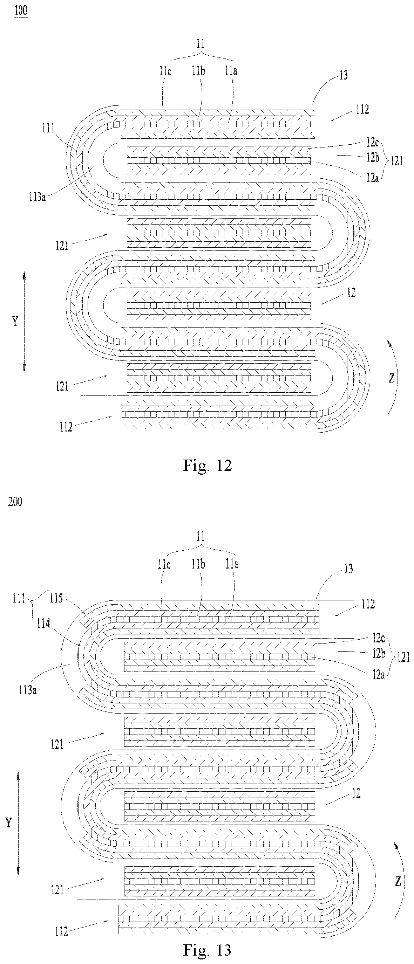

Fig. 12 schematically shows a cross-segmental view of an electrode assembly 100 according to another embodiment of the present application. In the electrode assembly 100 of the embodiment shown in Fig. 12, the structure same as that of the electrode assembly 10 of the embodiment shown in Fig. 5 will not be repeated here. The differences from the electrode assembly 10 of the embodiment shown in Fig. 5 are mainly described here. In this embodiment, the guiding portion 113 includes a groove 113a. The groove 113a is recessed and extended from the inner surface of the bending segment 111 toward the insulating substrate 11a. The opening of the groove 113 a faces to the second layer-stacking segment 121. The groove 113a penetrates the inner active material layer 11c and the inner electricity-electricity-conducting layer 11b in the thickness direction H of the first electrode sheet 11, and in the extending direction W of the first electrode sheet 11, the size of the groove 113a is equal to the size of the bending segment 111. The portions of the inner active material layer 11c and the inner electricity-conducting layer 11b corresponding to the bending segment 111 are completely removed, so that the surface of the insulating substrate 11a facing to the second layer-stacking segment 121 may be exposed. The portions of the outer active material layer 11c and the outer electricity-conducting layer 11b corresponding to the bending segment 111 are not removed but completely retained. Since the active material layer 11c and the electricity-conducting layer 11b at the inner side of the bending segment 111 are all removed, the rigidity of the bending segment 111 can be further reduced, so that the bending segment 111 is easy to be bent at the guiding portion 113, thereby effectively preventing the inner active material layer 11c from falling off or dropping powder after the bending segment 111 has been bent. In some other embodiments, the portions of the outer active material layer 11c and the outer electricity-conducting layer 11b corresponding to the bending segment 111 may be partially removed to form the groove 113a on the outer active material layer 11c.

Fig. 13 schematically shows a cross-segmental view of an electrode assembly 200 according to another embodiment of the present application. In the electrode assembly 200 of the embodiment shown in Fig. 13, the structures same as the electrode assembly 10 of the embodiment shown in Fig. 5 will not be repeated here. The differences from the electrode assembly 10 of the embodiment shown in Fig. 5 are mainly described here. In this embodiment, the guiding portion 113 includes the groove 113a, and the groove 113a is arranged on the outer surface of the bending portion 111.

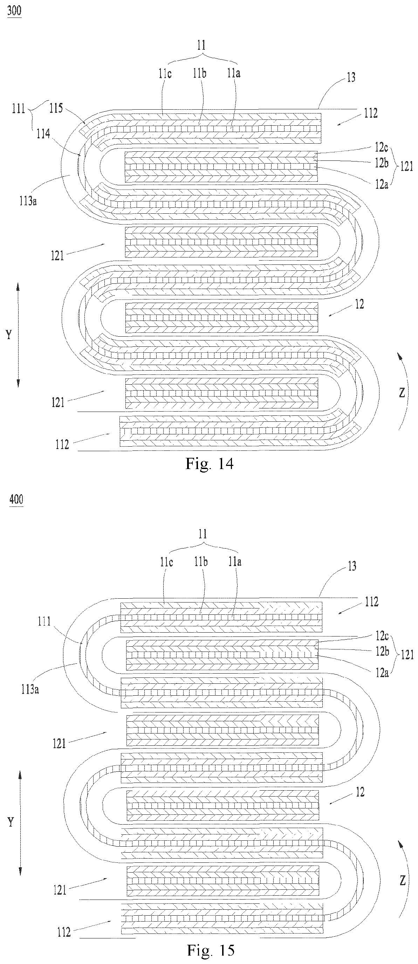

Fig. 14 schematically shows a cross-segmental view of an electrode assembly 300 according to another embodiment of the present application. In the electrode assembly 300 of the embodiment shown in Fig. 14, the structure same as that of the electrode assembly 10 of the embodiment shown in Fig. 5 will not be repeated here. The differences from the electrode assembly 10 of the embodiment shown in Fig. 5 are mainly described here. In this embodiment, each of the bending segments 111 is correspondingly provided with a guiding portion 113. The guiding portion 113 includes two grooves 113a. When the first electrode sheet 11 is in the unfolded state, the two grooves 113a are correspondingly arranged in the thickness direction H of the first electrode sheet 11. In the first electrode sheet 11 which has been bent, one of the two grooves 113a is arranged on the outer surface of the bending segment 111 so as to face away from the space formed between the two adjacent first layer-stacking segments 112, and the other is arranged on the inner surface of the bending segment 111 so as to face to the space formed between the two adjacent first layer-stacking segments 112. In this embodiment, for each of the bending segments 111, two grooves 113a are arranged in the thickness direction H, and the thickness of the weak region 114 is smaller in this case, so that it is beneficial to further reducing the rigidity of the weak region 114. In this way, since the stiffness of the weak region 114 corresponding to the two grooves 113a is relatively small, the bending segment 111 is more likely to be bent in the weak region 114 where the grooves 113a are arranged, so that it is beneficial to further improving the controllability of the bending position and the accuracy. Thus, compared with the bending segment 111 without the grooves 113a, when the active material layers 11c at two sides in the embodiment are bent, the internal stress of its own will be smaller, so that it is beneficial to further reducing the difficulty of bending, and reducing the possibility that the active material layers 11c falls off or drops powder from the electricity-conducting layer 11b due to the tensile or the compressive stress. In an example, the structures of the two grooves 113a are the same.

Fig. 15 schematically shows a cross-segmental view of an electrode assembly 400 according to another embodiment of the present application. In the electrode assembly 400 of the embodiment shown in Fig. 15, the structures same as the electrode assembly 300 of the embodiment shown in Fig. 14 will not be repeated here. The differences from the electrode assembly 10 of the embodiment shown in Fig. 14 are mainly described here. In this embodiment, only the insulating substrate 11a is arranged on each bending segment 111. In this embodiment, each bending segment 111 is correspondingly provided with a guiding portion 113. The guiding portion 113 includes two grooves 113a. At the bending segment 111, the active material layer 11c and the electricity-conducting layer 11b on the inner side of the insulating substrate 11a are completely removed, so that the surface of the insulating substrate 11a facing to the second layer-stacking segment 121 can be exposed; the electricity-conducting layer 11b and the active material layer 11c on the outer side of the insulating substrate 11a are all removed, so that the surface of the insulating substrate 11a facing away from the second layer-stacking segment 121 can be exposed. Since the active material layer 11c and the electricity-conducting layer 11b on the bending segment 111 are all removed, the rigidity of the bending segment 111 can be further reduced, so that the bending segment 111 is easily bent at the guiding portion 113, so as to effectively prevent the active material layer 11c at the inside from falling off or dropping powder after the bending segment 111 has been bent.

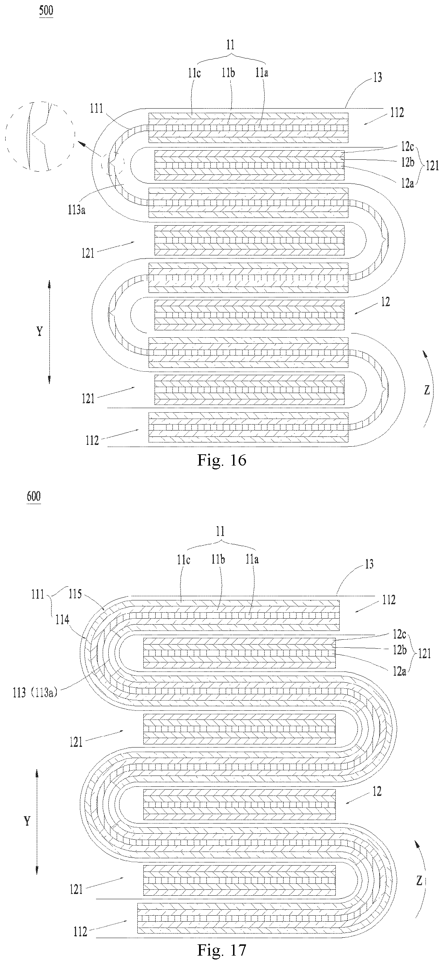

Fig. 16 schematically shows a cross-segmental view of an electrode assembly 500 according to another embodiment of the present application. In the electrode assembly 500 of the embodiment shown in Fig. 16, the structure same as the electrode assembly 400 of the embodiment shown in Fig. 15 will not be repeated here. The differences from the electrode assembly 10 of the embodiment shown in Fig. 14 are mainly described here. In this embodiment, the groove 113a also extends to a part of the insulating substrate 11a after penetrating the active material layer 11c and the electricity-conducting layer 11b. In this embodiment, a part of the groove 113a is allowed to be recessed into the insulating substrate 11a. Since a part of the insulating substrate 11a can be removed to form a part of the groove 113a, so that it is beneficial to further reduce the rigidity of the bending segment 111, and the bending segment 111 can be easier to be bent under the guidance of the guiding portion 113.

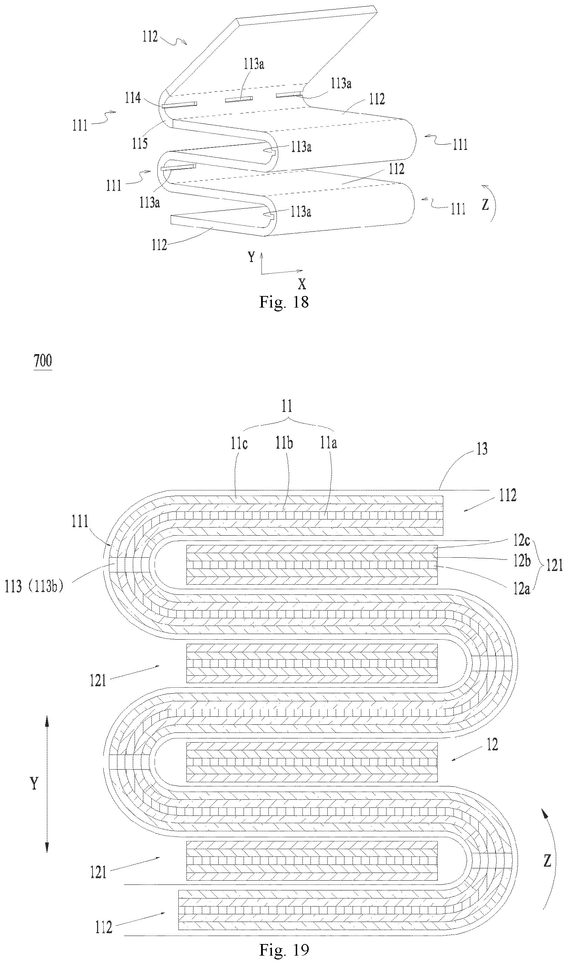

Fig. 17 schematically shows a cross-segmental view of an electrode assembly 600 according to another embodiment of the present application, and Fig. 18 shows the structure of the first electrode sheet of Fig. 17 in the bent state. In the electrode assembly 600 of the embodiment shown in Fig. 17, the structure same as the electrode assembly 10 of the embodiment shown in Fig. 5 will not be repeated here. The differences from the electrode assembly 10 of the embodiment shown in Fig. 5 are mainly described here. Referring to Figs. 17 and 18, in this embodiment, the guiding portion 113 includes more than two grooves 113a. In the first direction X, two or more grooves 113a are arranged to be spaced from one another. In this embodiment, when the first electrode sheet 11 is in the unfolded state, in the thickness direction H of the first electrode sheet 11, the weak regions 114 can be arranged corresponding to the grooves 113a. The number and positions of the weak regions 114 are set in a one-to-one correspondence with the number and positions of the grooves 113a. In this embodiment, the orthographic projection of each of the grooves 113a on a plane perpendicular to the first direction X may be a rectangle. However, the orthographic projection of the groove 113a is not limited to the rectangle, but can also be a trapezoid or a triangle. Each of the grooves 113a extends from the inner surface of the bending segment 111 toward the insulating substrate 11a, so that the opening of the groove 113a faces towards the second layer-stacking segment 121. The ratio of the sum of the sizes of the respective grooves 113a in the first direction X to the size of the bending segment 111 in the first direction X is 0.4 to 0.8, preferably 0.4, 0.5, 0.6, 0.7 or 0.8. In some other embodiments, each of the grooves 113a extends from the outer surface of the bending segment 111 toward the insulating substrate 11a, so that the opening of the groove 113a can face away from the second layer-stacking segment 121. In some other embodiments, a plurality of grooves 113a are arranged on each of the inner surface and the outer surface of the bending segment 111. In an example, when the first electrode sheet 11 is in the unfolded state, in the thickness direction H of the first electrode sheet 11, the positions of the grooves 113a on the inner surface and the grooves 113a on the outer surface correspond to each other. The positions of the weak regions 114 are arranged in a one-to-one correspondence with the positions of the grooves 113a on the inner surface and the positions of the grooves 113a on the outer surface. The grooves 113a on the inner surface and the grooves 113a on the outer surface jointly correspond one weak region 114.

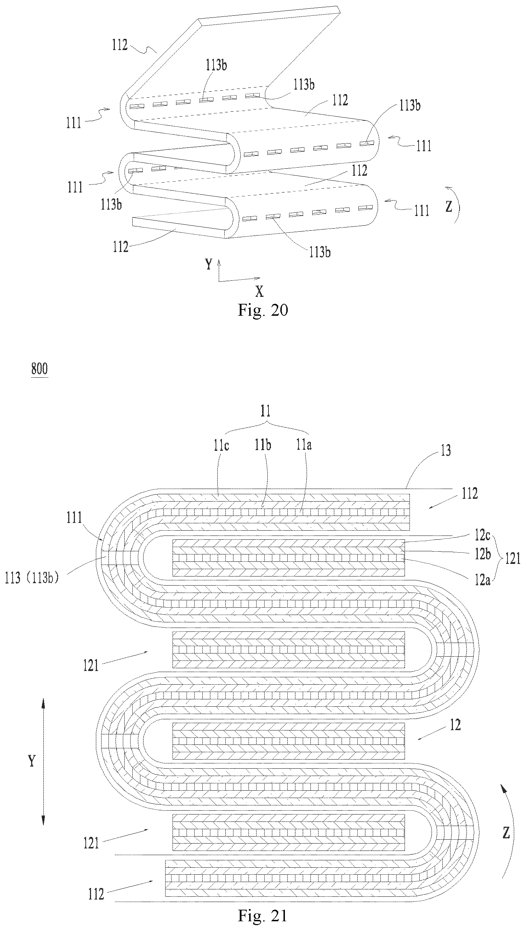

Fig. 19 schematically shows a cross-segmental view of an electrode assembly 700 according to another embodiment of the present application, and Fig. 20 shows the structure of the first electrode sheet of Fig. 19 in the bent state. In the electrode assembly 700 of the embodiment shown in Fig. 19, the structure same as the electrode assembly 10 of the embodiment shown in Fig. 5 will not be repeated here. The differences from the electrode assembly 10 of the embodiment shown in Fig. 5 are mainly described here. In this embodiment, the guiding portion 113 includes two or more through holes 113b. In the first direction X, two or more through holes 113b are arranged to be spaced from one another. When the first electrode sheet 11 is in the unfolded state, in the thickness direction H of the first electrode sheet 11, the through holes 113b penetrate through two active material layers 11c, the two electricity-conducting layers 11b and the insulating substrate 11a. In the unfolded state of the first electrode sheet 11, the size of the through hole 113b in the extending direction W of the first electrode sheet 11 is smaller than the size of the bending segment 111 in the extending direction W of the first electrode sheet 11. In an example, the shape of the through hole 113b may be a rectangle, a square, an ellipse, a trapezoid or a triangle. In this embodiment, the ratio of the sum of the sizes of the through holes 113b in the first direction X to the size of the bending segment 111 in the first direction X is 0.4 to 0.8, preferably 0.6 or 0.7.

In an embodiment, the guiding portion 113 includes the through holes 113b. The ratio of the sizes of the through holes 113b in the first direction X to the size of the bending segment 111 in the first direction X is 0.4 to 0.8, preferably 0.6 or 0.7.

In this embodiment, the through holes 113b on the bending segment 111 which has been bent are arranged to correspond to a middle region of the second layer-stacking segment 121. However, the present application does not limit the positions of the through holes 113b, and the positions of the through holes 113b may also be set to correspond to other regions of the second layer-stacking segment 121 that are deviated from the middle region in the second direction Y.

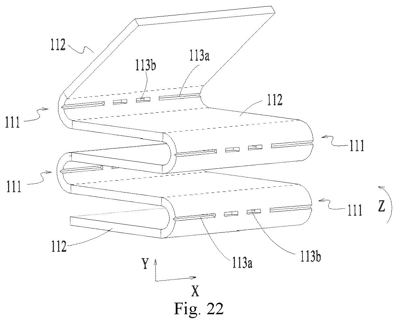

Fig. 21 schematically shows a schematic cross-segmental view of an electrode assembly 800 according to another embodiment of the present application, and Fig. 22 shows the structure of the first electrode sheet of Fig. 21 in a bent state. In the electrode assembly 800 of the embodiment shown in Fig. 21, the structure same as the electrode assembly 700 of the embodiment shown in Fig. 19 will not be repeated here. The differences from the electrode assembly 700 of the embodiment shown in Fig. 19 are mainly described here.

The guiding portion 113 includes two or more grooves 113a and two or more through holes 113b. In the first direction X, one or two or more grooves 113a may be arranged between two adjacent through holes 113b. Alternatively, one or two or more through holes 113b may be arranged between two adjacent grooves 113a. In some other embodiments, the guiding portion 113 may include other numbers of grooves 113a and other numbers of through holes 113b according to the requirement. In an example, the guiding portion 113 may include one groove 113a and one through hole 113b. As shown in Fig. 22, in one of the two adjacent bending segments 111, each groove 113a extends from the outer surface of the bending segment 111 toward the insulating substrate 11a, so that the opening of the groove 113a faces away from the second layer-stacking segment 121; on the other bending segment 111, each groove 113a extends from the inner surface of the bending segment 111 toward the insulating substrate 11a, so that the opening of the groove 113a can face to the second layer-stacking segment 121. It can be understood that, in some other embodiments, each groove 113a on each bending segment 111 extends from the outer surface of the bending segment 111 toward the insulating substrate 11a, so that the opening of the groove 113a can face away from the second layer-stacking segment 121. Alternatively, each groove 113a on each bending segment 111 extends from the outer surface of the bending segment 111 toward the insulating substrate 11a, so that the opening of the groove 113a can face the second layer-stacking segment 121.

Although the present application has been described with reference to the preferred embodiments, various modifications can be made to the present application and the components in the present application can be replaced with equivalents without departing from the scope of the present application. In particular, as long as there is no structural conflict, various technical features mentioned in the various embodiments can be combined in any way. The present application is not limited to the specific embodiments disclosed in the text, but includes all technical solutions falling within the scope of claims.

## Claims

1. An electrode assembly for a battery, the electrode assembly comprising
a first electrode sheet, comprising an insulating substrate, an electricity-conducting layer arranged on a surface of the insulating substrate, and an active material layer coating on a surface of the electricity-conducting layer, wherein the first electrode sheet is bent to form a multi-layer structure and comprises a plurality of bending segments and a plurality of first layer-stacking segments arranged to be stacked, each of the bending segments is configured to connect two adjacent first layer-stacking segments, and each of the bending segments comprises a guiding portion for guiding the bending segment to be bent during production;
a second electrode sheet, wherein a polarity of the second electrode sheet is opposite to a polarity of the first electrode sheet, and the second electrode sheet comprises a plurality of second layer-stacking segments, the plurality of second layer-stacking segments and the plurality of first layer-stacking segments are alternately arranged in a layer-stacking direction of the first layer-stacking segments.

2. The electrode assembly according to claim 1, wherein the guiding portion is arranged in a first direction, and the first direction is perpendicular to a bending direction of the bending segments.

3. The electrode assembly according to claim 1 or 2, wherein each of the first layer-stacking segments comprises two first outer edges opposite to each other; after the bending segments is guided to be bent during production, the first outer edges of the two adjacent first layer-stacking segments connected to the bending segments are consistent.

4. The electrode assembly according to any one of claims 1-3, wherein the guiding portion comprises at least one groove and/or at least one through hole.

5. The electrode assembly according to claim 4, wherein when the guiding portion comprises only one groove, in a first direction perpendicular to a bending direction of the bending segment, the groove is arranged continuously and penetrates the bending segment.

6. The electrode assembly according to claim 4, wherein when the guiding portion comprises a plurality of grooves and/or a plurality of through holes, the plurality of grooves and/or the plurality of through holes are arranged to be spaced from one another.

7. The electrode assembly according to claim 4, wherein the groove is arranged on a surface of the bending segment close to the second layer-stacking segments.

8. The electrode assembly according to claim 4, wherein the groove penetrates the electricity-conducting layer and exposes the insulating substrate.

9. The electrode assembly according to claim 4, wherein when the guiding portion comprises the through hole, the through hole penetrates the bending segment.

10. The electrode assembly according to claim 1, wherein only the insulating substrate is arranged on each of the bending segments.

11. A battery cell, comprising the electrode assembly according to any one of claims 1 to 10.

12. A battery comprising the battery cell according to claim 11.

13. An electricity-consuming device comprising the battery according to claim 12, wherein the battery is configured to supply electrical energy.
